# EUROPEAN PATENT APPLICATION

(11) **EP 4 394 935 A1**
(43) Date of publication of application: **03.07.2024**
(21) Application number: 22860936.8
(22) Date of filing: 14.06.2022
(51) Int. Cl.: H01M 4/38, H01M 10/052, H01M 10/0562, H01M 10/0565

(54) **NEGATIVE ELECTRODE ACTIVE MATERIAL AND LITHIUM ION BATTERY**

(30) Priority: 27.08.2021 JP 2021138654; 19.01.2022 JP 2022006497
(71) Applicant: Panasonic Intellectual Property Management Co., Ltd., Osaka-shi, Osaka 540-6207 (JP)
(72) Inventor: ASANO, Kazuko, Kadoma-shi, Osaka 571-0057 (JP); OKI, Yukihiro, Kadoma-shi, Osaka 571-0057 (JP); TAKEDA, Nanami, Kadoma-shi, Osaka 571-0057 (JP); HIBINO, Mitsuhiro, Kadoma-shi, Osaka 571-0057 (JP)
(74) Representative: Novagraaf International SA
(86) International application number: PCT/JP2022/023708
(87) International publication number: WO 2023/026642

(57) **Abstract**

The present invention provides: a negative electrode active material which has a La₃Ni₂Sn₇ crystal structure, while having a high weight energy density, and a lithium ion battery which uses this negative electrode active material. A negative electrode active material according to one embodiment of the present disclosure is contained in a negative electrode of a lithium ion battery, and is represented by general formula M₃Me₂X₇ (wherein M comprises at least one of La and Ca; Me comprises at least one element that is selected from the group consisting of Mn, Ni, Fe and Co; and X comprises at least one element that is selected from the group consisting of Ge, Si, Sn, and Al). With respect to the XRD pattern obtained by XRD measurement wherein Cu is used for an anticathode, the half-value width of the diffraction peak of the (1 171) plane of the negative electrode active material is 0.4713° or more.

## Description

### TECHNICAL FIELD

The present disclosure relates to a negative electrode active material and a lithium ion battery.

### BACKGROUND

Lithium ion batteries which are charged/discharged through movement of lithium ions (Li ions) between a positive electrode and a negative electrode have been widely utilized. In recent years, as well as graphite, Si having a higher capacity than that of graphite has been used for a negative electrode active material contained in the negative electrode of such a lithium ion battery. However, the volume of Si significantly changes during charging and discharging, which is problematic in that the battery capacity is apt to be decreased due to repeated charging/discharging.

Under the circumstances, a variety of alloys other than an Si alloy have been studied as a possible negative electrode active material of a high capacity lithium ion battery. For example, Patent Literature 1 describes that an alloy having an La₃Ni₂Sn₇ type crystal structure is used as a negative electrode active material.

### CITATION LIST

### NON PATENT LITERATURE

NON PATENT LITERATURE 1: Shinsuke Matsuno et al, La3Ni2Sn7 Ternary Intermetallic Phase for Lithium Insertion and Deinsertion, Electrochemical and Solid-State Letters, volume 8(4), A234-A236, (2005).

### SUMMARY

However, the alloy having the La₃Ni₂Sn₇ type crystal structure described in Non Patent Literature 1 is higher in volume energy density but lower in weight energy density than graphite.

It is an object of the present disclosure to provide a negative electrode active material having a high weight energy density while having an La₃Ni₂Sn₇ type crystal structure and provide a lithium ion battery using the negative electrode active material.

A negative electrode active material according to one aspect of the present disclosure is a negative electrode active material contained in a negative electrode of a lithium ion battery, and is characterized in that the negative electrode active material is represented by general formula M₃Me₂X₇ (where M includes at least one of La or Ca, Me includes at least one element selected from a group consisting of Mn, Ni, Fe, and Co, and X includes at least one element selected from a group consisting of Ge, Si, Sn, and Al), and, in an XRD pattern acquired by an XRD measurement using Cu for an anticathode, a full width at half maximum of a diffraction peak of a (1 17 1) plane of the negative electrode active material is greater than or equal to 0.4713°.

A lithium ion battery according to one aspect of the present disclosure includes a negative electrode containing the above-described negative electrode active material, a positive electrode, and a non-aqueous electrolyte.

When the negative electrode active material according to the present disclosure is used, the weight energy density can be increased.

### BRIEF DESCRIPTION OF DRAWINGS

FIG. 1 is a longitudinal section view of a cylindrical lithium ion battery according to an example of an embodiment.
FIG. 2 shows XRD patterns of negative electrode active materials contained in test cells according to examples and a comparative example.

### DESCRIPTION OF EMBODIMENTS

A negative electrode active material in which Si is mixed with graphite to increase the capacity of a lithium ion battery has been used. However, in consideration of a high price of Si and a possibility that cycle characteristics of the lithium ion battery containing Si may be deteriorated, a variety of alloys other than an Si alloy have attracted attention as a negative electrode active material. For example, Patent Literature 1 discloses, as a negative electrode active material for a high capacity lithium ion battery, an alloy having an La₃Ni₂Sn₇ type crystal structure. However, the alloy disclosed in Patent Literature 1 is higher in volume energy density but lower in weight energy density than graphite. As a result of diligent study, the present inventors have discovered that the weight energy density can be increased by setting a full width at half maximum of a diffraction peak of a (1 17 1) plane of a negative electrode active material greater than or equal to 0.4713° in an XRD pattern acquired by an XRD measurement using Cu for an anticathode.

Hereinafter, a negative electrode active material according to this disclosure and an example of an embodiment of a lithium ion battery using the negative electrode active material will be explained in detail. In the lithium ion battery, charging/discharging is performed when lithium ions are moved between a positive electrode and a negative electrode. In the description below, although a cylindrical battery in which a wound type electrode assembly is housed in a bottomed cylindrical outer can will be described as an example, an outer casing is not limited to the cylindrical outer can, and may be an angulated outer can, or may be an outer casing composed of laminated sheets including a metal layer and a resin layer. Further, the electrode assembly may be a laminate type electrode assembly in which a plurality of positive electrodes and a plurality of negative electrodes are alternately laminated with a separator inserted therebetween. Still further, although a non-aqueous electrolyte in a liquid state is described as an example in the following description, the non-aqueous electrolyte is not limited to a liquid and may be a solid.

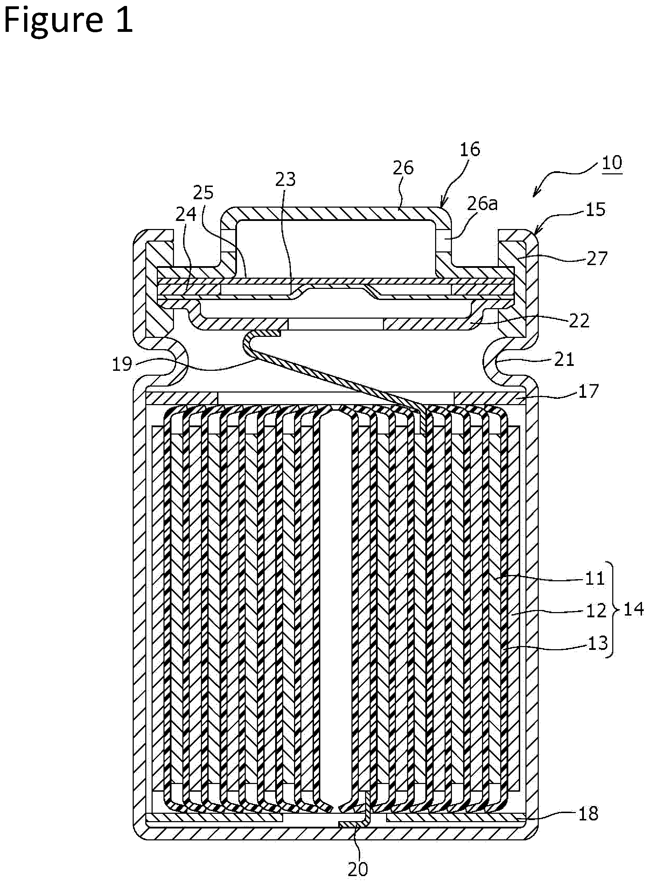

FIG. 1 is a longitudinal section view of a cylindrical lithium ion battery 10 according to an example of an embodiment. The lithium ion battery 10 shown in FIG. 1 includes an electrode assembly 14 and a non-aqueous electrolyte (not illustrated) which are housed in an outer casing 15. The electrode assembly 14 has a wound structure in which a positive electrode 11 and a negative electrode 12 are wound with a separator 13 disposed between the positive and negative electrodes 11 and 12. For a solvent (an organic solvent) of the non-aqueous electrolyte, carbonates, lactones, ethers, ketones, esters, or the like may be used, and two or more solvents of the foregoing may be mixedly used. When a mixture of the two or more solvents is used, it is preferable to use a mixed solvent containing both a cyclic carbonate and a chain carbonate. As the cyclic carbonate, for example, ethylene carbonate (EC), propylene carbonate (PC), butylene carbonate (BC), or the liken may be used, while as the chain carbonate, dimethyl carbonate (DMC), ethyl methyl carbonate (EMC), diethyl carbonate (DEC), and the like may be used. As electrolyte salt for the non-aqueous electrolyte, LiPF₆, LiBF₄, LiCF₃SO₃, or the like, and a mixture of the foregoing may be used. The dissolved amount of electrolyte salt in the solvent may be 0.5 to 2.0 mol/L, for example. In the following description, a sealing assembly 16 side is taken as an "upper" side, and a bottom side of the outer casing 15 is taken as a "lower" side for convenience of explanation.

When an open end of the outer casing 15 is closed by the sealing assembly 16, the internal space of the lithium ion battery 10 is hermetically sealed. Insulating plates 17 and 18 are disposed above and below the electrode assembly 14, respectively. A positive electrode lead 19 upwardly extends through a through hole in the insulating plate 17, and is welded to an undersurface of a filter 22 being a bottom plate of the sealing assembly 16. In the lithium ion battery 10, a cap 26 being a top plate of the sealing assembly 16 which is electrically connected to the filter 22 functions as the positive electrode terminal. On the other hand, a negative electrode lead 20 extends through a through hole in the insulating plate 18 toward the bottom of the outer casing 15, and is welded to an internal surface of the bottom of the outer casing 15. In the lithium ion battery 10, the external casing 15 functions as the negative electrode terminal. It should be noted that when the negative electrode lead 20 is arranged at the end region, the negative electrode lead 20 extends outside the insulating plate 18 and toward the bottom of the outer casing 15, and is welded to the internal surface of the bottom of the outer casing 15.

The outer casing 15 is, for example, a bottomed cylindrical outer can formed of a metal. A gasket 27 is disposed between the outer casing 15 and the sealing assembly 16, to ensure hermeticity inside the lithium ion battery 10. The outer casing 15 has a grooved region 21 which is formed, for example, by pressing a side surface of the outer casing 15 from outside, and is configured to support the sealing assembly 16. The grooved region 21 is preferably formed in an annular shape along the circumferential direction of the outer casing 15, and supports on its upper surface the sealing assembly 16 via the gasket 27.

The sealing assembly 16 includes the filter 22, a lower vent member 23, an insulating member 24, an upper vent member 25, and the cap 26 which are laminated from the electrode assembly 14 side in that order. Each of the members constituting the sealing assembly 16 has a disk shape or a ring shape, for example, and each of the members other than the insulating member 24 are electrically connected to another member. The lower vent member 23 and the upper vent member 25 are connected to each other at their central regions, and the insulating member 24 is interposed between outer circumferential edges of the vent members 23 and 25. When an internal pressure of the battery is increased due to abnormal heat generation, for example, the lower vent member 23 ruptures, which causes the upper vent member 25 to swell toward the cap 26 and thus to be separated from the lower vent member 23, resulting in interruption of electrical connection between the vent members. Then, in a case where the internal pressure is further increased, the upper vent member 25 ruptures, and gas is discharged from an opening 26a of the cap 26.

Hereinafter, the positive electrode 11, the negative electrode 12, and the separator 13, which constitute the electrode assembly 14, and in particular a negative electrode active material constituting the negative electrode 12 will be explained in detail.

### [Positive Electrode]

The positive electrode 11 includes, for example, a positive electrode core and a positive electrode mixture layer disposed on the surface of the positive electrode core. For the positive electrode core, a foil of a metal, such as aluminum, stable within a potential range of the positive electrode 11, and a film whose surface layer is provided with such a metal, for example, may be used. The thickness of the positive electrode core is, for example, 10 µm to 30 µm. The positive electrode mixture layer includes a positive electrode active material, a binder, and a conductive agent, and is preferably disposed on both surfaces of the positive electrode core other than a region where the positive electrode lead 19 is connected to the positive electrode core. The positive electrode 11 may be produced, for example, by applying, onto a surface of the positive electrode core, a positive electrode mixture slurry including the positive electrode active material, the binder, the conductive agent, and the like, drying an applied film, and subsequently compressing the applied film to form the positive electrode mixture layer on both surfaces of the positive electrode core.

The positive electrode active material contains as a main component a lithium transition metal oxide. The positive electrode active material may be composed of substantially only lithium transition metal oxides, or may include particles of an inorganic compound, such as an aluminum oxide or a lanthanoide-containing compound, fixed onto the surface of particles of the lithium transition metal oxide. One type of a lithium transition metal oxide may be used, or two or more types of lithium transition metal oxides may be used in combination.

A metal element to be contained in the lithium transition metal oxide may include nickel (Ni), cobalt (Co), manganese (Mn), aluminum (Al), boron (B), magnesium (Mg), titanium (Ti), vanadium (V), chromium (Cr), iron (Fe), cupper (Cu), zinc (Zn), gallium (Ga), strontium (Sr), zirconium (Zr), niobium (Nb), indium (In), tin (Sn), tantalum (Ta), tungsten (W), etc. An example of a preferable lithium transition metal oxide is a composite oxide represented by general formula Li_{α}NiₓM₍₁₋ₓ₎O₂ (where 0.1 ≤ α ≤ 1.2, 0.3 ≤ x < 1, and M includes at least one of Co, Mn, or Al).

Examples of the conductive agent contained in the positive electrode mixture layer may include a carbon material, such as carbon black, acetylene black, Ketjen black, carbon nanotubes, carbon nanofibers, or graphite. Examples of the binder contained in the positive electrode mixture layer may include a fluoropolymer, such as polytetrafluoroethylene (PTFE) and polyvinylidene fluoride (PVdF); polyacrylonitrile (PAN); a polyimide resin; an acrylic resin; a polyolefin resin, and the like. The foregoing resins may be used in combination with a cellulose derivative, such as carboxymethyl cellulose (CMC) or a salt thereof, polyethylene oxide (PEO), or the like.

### [Negative Electrode]

The negative electrode 12 includes, for example, a negative electrode core and a negative electrode mixture layer disposed on the surface of the negative electrode core. For the negative electrode core, a foil of a metal, such as copper, stable within a potential range of the negative electrode 12, a film whose surface layer is provided with such a metal, or the like may be used. The thickness of the negative electrode core is, for example, 5 µm to 15 µm. The negative electrode mixture layer includes a negative electrode active material and a binder, and may be preferably formed on both surfaces of the negative electrode core other than a region where the negative electrode 20 is connected to the core, for example. The negative electrode 12 may be produced, for example, by applying, onto a surface of the negative electrode core, a negative electrode mixture slurry containing the negative electrode active material, the binder, a conductive agent, and the like, drying an applied film, and subsequently compressing the applied film to form the negative electrode mixture layer on both surfaces of the negative electrode core. It should be noted that the negative electrode 12 may be formed by mixing the negative electrode active material and a copper powder and compressing the resultant mixture in a pellet form.

The negative electrode active material contained in the negative electrode 12 includes an alloy represented by general formula M₃Me₂X₇ (where M includes at least one of La or Ca, Me includes at least one element selected from a group consisting of Mn, Ni, Fe, and Co, and X includes at least one element selected from a group consisting of Ge, Si, Sn, and Al) (hereinafter the alloy may be referred to as an M₃Me₂X₇ type alloy). The M₃Me₂X₇ type alloy is, for example, La₃Ni₂Sn₇. Further, the negative electrode 12 may include a negative electrode active material other than the M₃Me₂X₇ type alloy. The negative electrode active material other than the M₃Me₂X₇ type alloy is not particularly limited as long as it can reversibly occlude and release lithium ions, and for the negative electrode active material, graphite (natural graphite or artificial graphite), a metal to be alloyed with lithium, such as silicone (Si) or tin (Sn), or an oxide containing a metal element, such as Si or Sn, may be used, for example.

In an XRD pattern acquired by XRD measurement using Cu for an anticathode, a full width at half maximum of a diffraction peak of a (1 17 1) plane of the M₃Me₂X₇ type alloy is greater than or equal to 0.4713°, for example. In this case, the weight energy density of the M₃Me₂X₇ type alloy can be increased. The diffraction peak of the (1 17 1) plane of the M₃Me₂X₇ type alloy is detected in the vicinity of 64°. The upper limit of the full width at half maximum of the diffraction peak of the (1 17 1) plane is, for example, 5°. It should be noted that as the full width at half maximum of a diffraction peak of the (1 17 1) plane of a typical M₃Me₂X₇ type alloy is approximately 0.11°, the full width at half maximum of the diffraction peak of the dislocation density (1 17 1) plane of the M₃Me₂X₇ type alloy according to the present disclosure is greater than that of the typical M₃Me₂X₇ type alloy.

The XRD measurement may be performed using a powder X-ray diffraction device (X-ray source Cu - Kα) under the following conditions:
Measurement Range: 10° to 70°
Scanning Rate: 10 °/min

A volume-based median diameter (D50) of the M₃Me₂X₇ type alloy may be, for example, 0.1 µm to 50 µm, or may be 1 µm to 10 µm. The D50 of the M₃Me₂X₇ type alloy can be decreased, for example, by pulverizing the alloy with a ball mill, and can be adjusted depending on processing conditions of the ball mill. The D50 means a particle diameter at which a cumulative frequency from the smaller particle size side reaches 50% in a volume-based particle size distribution, and is also referred to as a mid-level diameter. The particle size distribution of the M₃Me₂X₇ type alloy can be measured, using water as a dispersion medium, with a laser diffraction type particle size distribution measuring device (for example, MT3000II manufactured by MicrotracBEL Corp.).

For example, the M₃Me₂X₇ type alloy according to this disclosure may be produced as described below.

### <Production Method of M₃Me₂X₇ type alloy>

(1) A metal M, a metal ME, and a metal X prepared as raw materials are mixed at a predetermined ratio, and the resulting mixture is arc melted to form an M₃Me₂X₇ type alloy block.
(2) The formed M₃Me₂X₇ type alloy block is inserted into a quartz tube, and the quartz tube is vacuum sealed and subsequently placed in a slow cooling furnace for annealing. The annealing is performed under conditions that an annealing temperature is 400 °C to 1000 °C, and a holding time is 10 hours to 72 hours, for example.
(3) A block of the annealed M₃Me₂X₇ type alloy is pulverized, for example, by means of a mortar or a planetary ball mill. The ball milling is performed under conditions that a rotation speed is 100 rpm to 500 rpm and a processing time is 1 hour to 720 hours, for example.
(4) After the ball milling, the M₃Me₂X₇ type alloy is classified, for example, through a mesh to remove coarse particles.

The M₃Me₂X₇ type alloy produced by the above-described production method exhibits a full width at half maximum of the diffraction peak of the (1 17 1) plane greater than or equal to 0.4713° in the XRD pattern obtained by XRD measurement using Cu for the anticathode. Through the ball milling, because particles are pulverized and therefore decreased in particle diameter, while distortion (defects or the like) of crystal structure occurs on surfaces of particles pulverized/sheared by ball milling operation of the planetary ball mill, resulting in a collapse of periodicity of atomic arrangement, it can be considered that the full width at half maximum of the ball milled M₃Me₂X₇ type alloy is increased from that of the M₃Me₂X₇ type alloy which is not ball milled yet. Then, it is assumed that Li ions are included into the defects, voids, and the like.

For the binder contained in the negative electrode mixture layer, a fluoropolymer, PAN, a polyimide resin, an acrylic resin, a polyolefin resin, and the like may be used as in the case of the positive electrode 11. When a mixture slurry is prepared using an aqueous solvent, it is preferable to use CMC or a salt thereof, styrene-butadiene rubber (SMR), polyacrylic acid (PAA) or a salt thereof, polyvinyl alcohol, or the like.

The negative electrode mixture layer may include a conductive agent. The conductive agent can function to render the conductive path uniform. Examples of the conductive agent contained in the negative electrode mixture layer may include carbon particles, such as carbon black (CB), acetylene black (AB), Ketjen black, carbon nanotubes (CNT), graphene, or graphite. The foregoing may be used alone or two or more types of the foregoing may be used in combination. It is preferable for the conductive agent to include CNT. The CNT may be either a single-walled carbon nanotube (SWCNT) or a multi-walled carbon nanotube (MWCNT). Because an amount of SWCNT smaller than an amount of the MWCNT can form the conductive path in the negative electrode mixture layer, it is preferable that the CNT contain the SWCNT.

### [Separator]

For the separator 13, a porous sheet having both an ion permeability and an insulating property is used. Specific examples of the porous sheet include a microporous thin film, a woven fabric, a nonwoven fabric, and the like. As the material of the separator 13, an olefin resin, such as polyethylene or polypropylene, cellulose, and the like are preferably used. The separator 13 may have either a single-layer structure or a laminated structure. On the surface of the separator 13, a heat resistant layer containing a heat resistant material may be formed. Examples of the heat resistant material may include a polyamide resin, such as aliphatic polyamide or aromatic polyamide (aramid), a polyimide resin, such as polyamide imide or polyimide, and the like.

### EXAMPLES

Hereinafter, the present disclosure will be further described with reference to Examples, although the present disclosure is not limited to these Examples.

### <Example 1>

### [Production of Negative Electrode Active Material]

As raw materials, a piece of metal La, a wire of Ni, and a piece of metal Sn were used. For the piece of metal La, an La metal piece manufactured at a purity level of 3N by NIPPON YTTRIUM CO., LTD was used after the metal piece was arc melted and degassed and subsequently the surface was polished with a metallic brush. For the wire of Ni, a cp3-mm Ni wire manufactured at a purity level of 3N by JAPAN PURE CHEMICAL CO.,LTD. was used. For the piece of metal Sn, a shot-shape Sn metal piece manufactured at a purity level of 4N by Furuuchi Chemical Corporation was used. The raw materials were mixed at the molar ratio of La:Ni:Sn = 3:2:7, and the resultant mixture was arc melted to obtain an alloy block having crystal structure of La₃Ni₂Sn₇. The obtained block was sealed in a quartz tube in a vacuum state, and subsequently annealed in a muffle furnace. Annealing was achieved by increasing temperature at a rate of 300 °C / hour from an ambient temperature to a temperature of 680 °C, and maintaining that temperature for 48 hours, followed by naturally cooling. Then, the annealed alloy block was manually pulverized in a mortar for an hour, inserted together with zirconia balls in a zirconia container, and ball milled at a predetermined rotation speed by means of a planetary ball mill. The ball milling was performed by repeating a 5-minute operation after a 5-minute rest for each operation. Ball milled powder was classified through a 45-µm mesh to remove coarse particles. A volume-based median diameter (D50) of the produced negative electrode active material (powder of La₃Li₂Sn₇) was 6.8 µm.

### [Production of Negative Electrode]

The above-described negative electrode material was mixed with powder of Cu at a mass ratio of 4:6, and a resultant mixture was compressed with a pressure of 5 MPa to produce a pellet having a diameter of ϕ7.5 mm and a height of 0.8 mm. The produced pellet was used as a negative electrode.

### [Production of Counter Electrode]

To examine characteristics of the negative electrode active material, metal lithium (Li) was used as a counter electrode in place of the above-described positive electrode. In a typical lithium ion battery, a lithium transition metal oxide (which includes, in general, a transition metal, such as Co, Mn, or Ni), such as LiNiO₂, is generally used for the positive electrode active material. However, in the examples, rather than the positive electrode active material, which is generally used for an electrode, a foil of a lithium metal cut into ϕ7.5 mm was used for the electrode in order to examine characteristics of the negative electrode active material itself independent of the positive electrode active material. Such a method is often used for evaluating an active material.

### [Production of Non-Aqueous Electrolyte]

A non-aqueous electrolyte was prepared by dissolving 1.0 mol/L of LiPF₆ as an electrolyte salt into a non-aqueous solvent in which ethylene carbonate (EC) and ethyl methyl carbonate (EMC) were mixed at a volume ratio of 1:3.

### [Production of Test Cell]

The above-described negative electrode and a positive electrode composed of the foil of lithium metal were disposed so as to be opposed to each other via a separator to form an electrode assembly, and the electrode assembly were housed in a coin-shaped outer can. After injecting the non-aqueous electrolyte into the outer can, the outer can was sealed to obtain a coin-shaped test cell (non-aqueous electrolyte secondary battery).

### <Examples 2 to 5>

Test cells for Examples 2 to 5 were produced in the same manner as in Example 1, except that the length of time of ball milling performed using the planetary ball mill was changed in production of the negative electrode active material. The length of time of ball milling was extended from Example 2 toward Example 5. That is, among Examples 1 to 5, the length of time of ball milling was shortest in Example 1 and longest in Example 5.

### <Comparative Example 1>

A test cell was produced in the same manner as in Example 1, except that the ball milling using the planetary mill was not performed in production of the negative electrode active material.

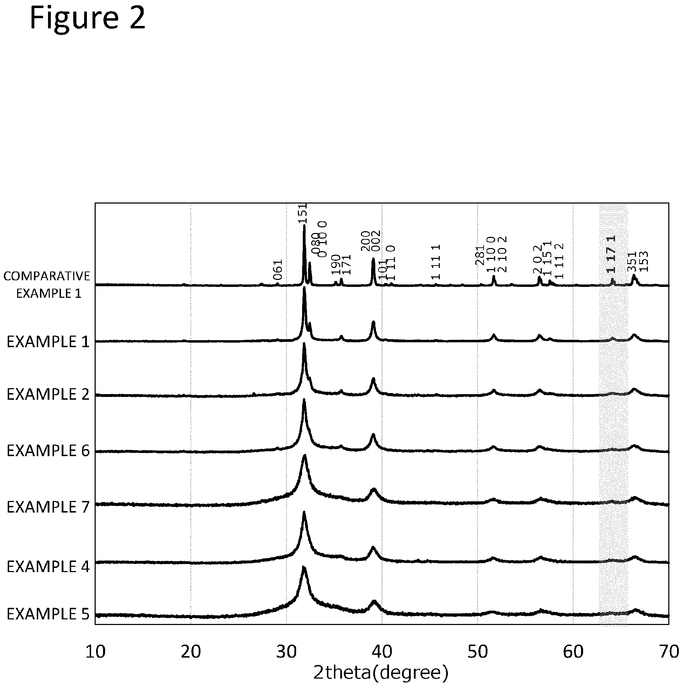

Battery capacities (a charge capacity and a discharge capacity) of each of the test cells in Examples 1 to 5 and Comparative Example 1 were evaluated according to a method described below. Table 1 shows results of the evaluation. In addition to the results, Table 1 also shows values of both the full width at half maximum of the diffraction peak of the (1 17 1) plane and charge/discharge efficiency. Meanwhile, FIG. 2 shows XRD patterns obtained from the negative electrode active materials in Examples 1, 2, and 4 to 7 (those in Examples 6 and 7 will be described further below) and in Comparative Example 1.

### [Evaluation of Battery Capacity]

Discharging in this evaluation refers to an action of discharging a battery which includes the negative electrode active material in Example 1 and Comparative Examples 1 to 5 in combination of a typically used positive electrode which is, for example, formed of LiNiO₂. Here, for the above-described coin-shaped battery in which the negative electrode is taken as a working electrode and the metal lithium (Li) is taken as a counter electrode, the action should be expressed as charging in an intrinsic sense. However, conforming to charge/discharge behavior of a negative electrode in a battery including the negative electrode in combination with the typically used positive electrode, the action is described with respect to an opposite charging/discharging direction. In other words, charging denotes an action of passing a current so as to cause a decrease in a potential of the negative electrode functioning as the working electrode, while discharging denotes an action of passing a current so as to cause an increase in the potential of the negative electrode functioning as the working electrode.

A charge/discharge cycle of charging the battery with a constant current of 2.6 mA until the battery voltage reaches 0.01 V and subsequently discharging the battery with a constant current of 2.6 mA until the battery voltage reaches 1.5 V was repeated for two cycles, and the charge capacity and the discharge capacity in the second cycle were measured. It should be noted that the expressions relating to charge and discharge are opposite to those in normal usage as explained above. That is, the charge denotes operation to pass a current so as to decrease the potential of the working electrode until the battery voltage reaches 0 V, and the discharge denotes operation to pass a current so as to increase the potential of the working electrode until the battery voltage reaches 1 V.

**[Table 1]**

| | Full Width at Half Maximum of Diffraction Peak of (117 1) Plante [°] | Battery Capacity [mAh/g] | | Charge/Discharge Efficiency [%] |
|---|---|---|---|---|
| | | Charge Capacity | Discharge Capacity | |
| Example 1 | 0.4713 | 51.1 | 48.7 | 95.4 |
| Example 2 | 0.6941 | 106.5 | 104.4 | 98.1 |
| Example 3 | 1.0785 | 135.17 | 132.3 | 97.5 |
| Example 4 | 1.7952 | 149.1 | 144.8 | 97.1 |
| Example 5 | 2.2443 | 135.9 | 133.0 | 97.9 |
| Comparative Example 1 | 0.1114 | 8.8 | 7.6 | 86.0 |

As shown in Table 1, the test cells in the Examples having the full width at half maximum greater than or equal to 0.4713° exhibited higher values of the battery capacity than that of the test cell in Comparative Example 1 having the full width at half maximum of 0.1114°. In addition, the cells in the Examples also exhibited higher values of the charge/discharge efficiency than that of the cell of Comparative Example 1.

### <Example 6>

### [Production of Negative Electrode Active Material]

As raw materials, the piece of metal La, the wire of Ni, and the piece of metal Sn were used. For the piece of metal La, the La metal piece manufactured at the purity level of 3N by NIPPON YTTRIUM CO., LTD was used after the metal piece was arc melted and degassed, and subsequently the surface was polished with the metallic brush. For the wire of Ni, the ϕ3 mm Ni wire manufactured at the purity level of 3N by JAPAN PURE CHEMICAL CO., LTD. was used. For the piece of metal Sn, the shot-shape Sn metal piece manufactured at the purity level of 4N by Furuuchi Chemical Corporation was used. The raw materials were mixed at the molar ratio of La:Ni:Sn = 3:2:7, and the resultant mixture was arc melted to obtain the alloy block having crystal structure of La₃Ni₂Sn₇. The obtained block was sealed in the quartz tube in the vacuum state, and subsequently annealed in the muffle furnace. Annealing was achieved by increasing temperature at the rate of 300°C / hour from an ambient temperature to the temperature of 680°C, and maintaining that temperature for 48 hours, followed by natural cooling. Then, the annealed alloy block was manually pulverized in the mortar for an hour, inserted together with zirconia balls in the zirconia container, and ball milled at the predetermined rotation speed by mans of the planetary ball mill. The ball milling was performed by repeating a 5-minute operation after a 5-minute rest for each operation. Ball milled powder was classified through the 45-µm mesh to remove coarse particles. A volume-based median diameter (D50) of the produced negative electrode active material (powder of La₃Li₂Sn₇) was 6.8 µm.

### [Production of Negative Electrode]

A negative electrode mixture slurry was prepared by mixing the negative electrode active material described above, PVDF serving as a binder, and SWCNT serving as a conductive agent at a mass ratio of 97.6:0.4:2, using N-methyl-2-pyrrolidone (NMP) as a dispersion medium. Then, the prepared negative electrode mixture slurry was applied to a negative electrode core formed of a copper foil having a thickness of 10 µm, and the applied film was dried and compressed. Subsequently, a negative electrode was obtained by cutting the compressed film in the shape of a disc of ϕ7.5 mm.

### [Production of Test Cell]

In a manner similar to Example 1, a counter electrode and a non-aqueous electrolyte were produced. The counter electrode and the non-aqueous electrolyte were used together with the above-described negative electrode to produce a test cell as in the case of Example 1.

### <Example 7>

A test cell was produced in the same manner as in Example 6, except that the rotation speed of the planetary ball mill was increased in production of the negative electrode active material.

### <Example 8>

A test cell was produced in the same manner as in Example 6, except that the rotation speed of the planetary ball mill was increased and the length of time of ball milling was extended in production of the negative electrode active material.

### <Comparative Example 2>

A test cell was produced in the same manner as in Example 6, except that the step of ball milling using the planetary ball mill was not performed in production of the negative electrode active material.

Each of the test cells in Examples 6 to 8 and Comparative Example 2 was evaluated with respect to the battery capacity (charge capacity and discharge capacity) according to the method described below. Results of the evaluation are shown in Table 2. Table 2 also shows values of the full width at half maximum of the diffraction peak of the (1 17 1) plane and the charge/discharge efficiency.

### [Evaluation of Battery Capacity]

A charge/discharge cycle of charging the test cell with a constant current of 0.05 C until the battery voltage reaches 0.01 V and then discharging the test cell with the constant current of 0.05 C until the battery voltage reaches 1.5 V was repeated for two cycles, and the charge capacity and the discharge capacity in the second cycle were measured.

**[Table 2]**

| | Full Width at Half Maximum of Diffraction Peak of (1 17 1) Plante [°] | Battery Capacity [mAh/g] | | Charge/Discharge Efficiency [%] |
|---|---|---|---|---|
| | | Charge Capacity | Discharge Capacity | |
| Example 6 | 1.2137 | 160.3 | 153.7 | 95.9 |
| Example 7 | 1.3807 | 239.4 | 231.0 | 96.5 |
| Example 8 | 2.2343 | 240.9 | 233.0 | 96.7 |
| Comparative Example 2 | 0.1114 | 8.0 | 6.7 | 86.0 |

As in the case of the results shown in Table 1, the test cells in the Examples were greater in both the battery capacity and the charge/discharge efficiency than those of the test cell in Comparative Example 2.

### REFERENCE SIGNS LIST

10 lithium ion battery; 11 positive electrode, leader; 12 negative electrode; 13 separator; 14 electrode assembly; 15 outer casing; 16 sealing assembly; 17, 18 insulating plate; 19 positive electrode lead; 20 negative electrode lead; 21 grooved region; 22 filter; 23 lower vent member; 24 insulating member; 26 upper vent member; 26 cap; 26a opening; 27 gasket.

## Claims

1. A negative electrode active material contained in a negative electrode for a lithium ion battery, wherein:
the negative electrode active material is represented by general formula M₃Me₂X₇ (where M includes at least one of La or Ca, Me includes at least one element selected from a group consisting of Mn, Ni, Fe, and Co, and X includes at least one element selected from a group consisting of Ge, Si, Sn, and Al); and
in an XRD pattern acquired by an XRD measurement using Cu for an anticathode, a full width at half maximum of a diffraction peak of a (1 17 1) plane of the negative electrode active material is greater than or equal to 0.4713°.

2. A lithium ion battery, comprising:
a negative electrode comprising the negative electrode active material according to Claim 1;
a positive electrode; and
a non-aqueous electrolyte.

3. The lithium ion battery according to Claim 2, wherein the non-aqueous electrolyte is a solid.
